(19) Europäisches Patentamt
European Patent Office
Office européen des brevets

(11) **EP 2 820 392 B1**

(12) **EUROPÄISCHE PATENTSCHRIFT**

(45) Veröffentlichungstag und Bekanntmachung des Hinweises auf die Patenterteilung:
**09.09.2015 Patentblatt 2015/37**

(21) Anmeldenummer: **13713069.6**

(22) Anmeldetag: **01.03.2013**

(51) Int Cl.:
***G01M 13/02*** *(2006.01)*

(86) Internationale Anmeldenummer:
**PCT/AT2013/050052**

(87) Internationale Veröffentlichungsnummer:
**WO 2013/126940 (06.09.2013 Gazette 2013/36)**

(54) **VERFAHREN ZUR DÄMPFUNG VON SCHWINGUNGEN**

METHOD FOR DAMPING VIBRATIONS

PROCÉDÉ D'AMORTISSEMENT DE VIBRATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2012 AT 500482012**

(43) Veröffentlichungstag der Anmeldung:
**07.01.2015 Patentblatt 2015/02**

(73) Patentinhaber: **Kristl, Seibt & Co. Gesellschaft mbH.**
**8052 Graz (AT)**

(72) Erfinder:
• **BAUER, Robert**
**A-8041 Graz (AT)**
• **LANG, Marcus**
**A-8045 Graz (AT)**
• **PRESSL, Bernd**
**A-8044 Graz (AT)**
• **ROSSEGGER, Wilfried**
**A-8052 Graz (AT)**
• **VOIT, Franz**
**A-Gleisdorf 8200 (AT)**

(74) Vertreter: **Sonn & Partner Patentanwälte**
**Riemergasse 14**
**1010 Wien (AT)**

(56) Entgegenhaltungen:
**WO-A1-2011/022746      AT-U2- 7 889**

**Beschreibung**

Die Erfindung betrifft ein Verfahren zur Dämpfung von Schwingungen beim Prüfen eines zumindest eine Welle aufweisenden Antriebsstrangs, wobei die Welle zur Einstellung eines Antriebs- bzw. Belastungsmoments mit zumindest einer Antriebs- bzw. Belastungsmaschine verbunden wird, welcher ein Sollwert des Antriebs- bzw. Belastungsmoments vorgegeben wird, wobei ein von der Relativverdrehung zwischen zwei Stellen der Welle abhängiges Wellenmoment gemessen wird.

Bei einem Antriebsstrang-Prüfstand wird die zu prüfende Komponente (nachstehend auch kurz Prüfling genannt) meist zwangsweise nicht wie an ihrem späteren Einsatzort mit der Umwelt verbunden. Beispielsweise wird ein Verbrennungsmotor am Prüfstand über eine relativ steife Welle an eine Belastungsmaschine angeschlossen, anstatt über einen weicheren Antriebsstrang und über Reifen mit der Straße in Kontakt zu stehen. Dadurch ergeben sich am Prüfstand meist schwach gedämpfte (und dadurch stark ausgeprägte) Resonanzfrequenzen, die der Prüfling an seinem tatsächlichen Einsatzort nicht vorfindet. Werden diese Resonanzfrequenzen vom Prüfling angeregt, können die sich ergebenden Schwingungen das Prüfergebnis massiv beeinflussen oder sogar zur Zerstörung des Prüflings und/oder des Prüfstands führen. Deswegen sind Maßnahmen zur Dämpfung dieser Resonanzfrequenzen am Prüfstand notwendig. Im Folgenden werden die bekannten Methoden aufgezählt. Die Beispiele gehen der Einfachheit halber von einem Prüfstand mit nur einer Welle und einer Belastungsmaschine aus, alle Methoden können aber auch bei Prüfständen mit mehreren Wellen sowie mit Antriebs- und/oder Belastungsmaschinen angewendet werden.

Durch den Einsatz einer weicheren, stärker gedämpften Verbindungswelle können die Resonanzfrequenzen vor allem gesenkt und zusätzlich auch stärker gedämpft werden. Werden die Resonanzfrequenzen durch den Prüfling im Normalbetrieb nicht mehr angeregt (z.B. weil die Leerlaufdrehzahl eines Verbrennungsmotors einer höheren Frequenz entspricht), ist das Problem somit gelöst. Nachteilig wirkt sich die Tiefpasswirkung der weichen Verbindungswelle aus, weiters kann durch Reibung eine nicht unerhebliche Leistung in der Welle umgesetzt werden (die Welle wird heiß und eventuell zerstört) und schließlich stellt diese Methode keine Lösung für Prüflinge dar, die im Normalbetrieb trotzdem die Resonanzfrequenzen anregen.

Alternativ sind bereits Verfahren zur aktiven Dämpfung bekannt, bei denen der Belastungsmaschine ein zusätzliches Moment aufgebracht wird, das einer Wellendämpfung entspricht. Dafür bräuchte man eigentlich die Differenzwinkelgeschwindigkeit der Welle (vgl. z.B. DE 38 08 524), diese kann aber mit Hilfe des gemessenen Wellenmoments abgeschätzt werden (vgl. EP 1 333 268 A2): Das gemessene Wellenmoment wird differenziert, mit einem Korrekturfaktor gewichtet und dem Drehmomentsollwert der Belastungsmaschine (der beispielsweise vom Ausgang eines Drehzahlreglers stammt) als Korrekturwert aufgeschaltet. Die Differentiation einer Messgröße hat jedoch den Nachteil, dass das immer vorhandene Messrauschen stark verstärkt wird. Zwar könnte man das differenzierte Moment mit einem Tiefpass filtern, allerdings wird dann diese Methode bei höheren Resonanzfrequenzen instabil, wodurch der Einsatz in der Praxis stark eingeschränkt ist.

In der US 5,078,008 A ist eine Steuerungsvorrichtung als Stand der Technik beschrieben, bei der das Drehmoment einer Belastungsmaschine in Abhängigkeit von einem Sollwert und einem gemessenen Wellenmoment geregelt wird. Die Beziehung zwischen dem Sollwert und dem gemessenen Wellenmoment ist dabei jedoch nicht angegeben.

Die DE 102 47 347 A1 zeigt ein Drehmomentregelungssystem, welches Resonanzen bei hohen Drehzahlen durch eine robuste Regelung vermeiden soll, wobei ein Drehmomentregler eine Differenz zwischen dem axialen Solldrehmoment und dem von der Anlage detektierten und ausgegebenen axialen Drehmoment erhält. Die so erhaltene Differenz wird dabei nicht als solche (d.h. direkt) einer Antriebs- bzw. Belastungsmaschine vorgegeben; stattdessen wird eine Übertragungsfunktion, welche ein an das Motorprüfsystem angepasstes $\mu$-Syntheseverfahren implementiert, auf die besagte Differenz angewendet.

Die US 4,468,958 A zeigt einen Prüfstand, bei dem eine Welle eines Antriebsstrangs mit einer Drehmomentmessung verbunden ist, wobei das gemessene Drehmomentsignal von einem Computer mit einem Referenzdrehmomentsignal verglichen wird. Wie sich das vom Computer ausgegebene Steuersignal aus dem gemessenen Drehmomentsignal und dem Referenzdrehmomentsignal bestimmt, ist dabei nicht angegeben.

Die WO 2011/022746 A1 beschreibt eine Regelung einer Prüfstandsanordnung, wobei ein Sollwert für das Drehmoment der Verbindungswelle aus einem Impedanzmodell des Prüflings abgeleitet wird.

Aus der AT 010 301 U2 ist weiters ein Verfahren bekannt, bei dem Messdaten über einen Arbeitszyklus (z.B. 720° Kurbelwinkel bei einem Vier-Takt-Motor) gespeichert und für eine Vorhersage zukünftiger Sollwerte genutzt werden, mit denen die Resonanzfrequenzen besser gedämpft sind. Da aber die dämpfende Wirkung erst bei zukünftigen Arbeitszyklen wirksam wird, funktioniert diese Methode nur im eingeschwungenen Zustand, wodurch der Praxiseinsatz bei transienten Prüfungen problematisch ist. Außerdem stellt die Speicherung der Messdaten im Regler einen nicht unerheblichen Aufwand dar.

Die AT 007 889 U2 betrifft ein Verfahren zur Vermessung der dynamischen Parameter der Verbindungswelle während eines in einer Identifikationsphase vor der eigentlichen Prüfung aufgebrachten pseudo-stochastischen Drehzahlverlaufs.

Schließlich ist aus der US 8,006,548 B2 eine robuste Regelung bekannt, wobei basierend auf einem genauen mathematischen Modell des Prüfstands Regler entworfen werden, die auch bei leichten Parameterschwankungen den Prüfstand geeignet regeln. Allerdings muss am Prüfstand auch mit starken Parameterschwankungen im Betrieb gerechnet werden, weiters ist über den Prüfling üblicherweise wenig bekannt. In der Praxis kann man vom Prüfstands-Bedienpersonal nicht erwarten, dass für jeden neuen Prüfling ein passender robuster Regler entworfen wird.

Es ist Aufgabe der vorliegenden Erfindung, ein Verfahren der eingangs angeführten Art bzw. eine Vorrichtung zur Durchführung des Verfahrens zu schaffen, welches sich einer einfachen und gegen Messrauschen unempfindlichen Regelung bedient, auch bei transienten Prüfungen - insbesondere bei der erstmaligen Prüfung eines Prüflings - die gewünschte Dämpfung erzielt und keine Kenntnisse über Parameter des Prüflings oder des Prüfstands voraussetzt.

Zur Lösung der gestellten Aufgabe sieht die Erfindung ein Verfahren wie eingangs angegeben vor, das dadurch gekennzeichnet ist, dass das gemessene Wellenmoment als solches (d.h. direkt und dem Betrag nach unverändert) zum Sollwert des Antriebs- bzw. Belastungsmoments addiert wird. Vorzugsweise wird das gemessene Wellenmoment direkt, d.h. insbesondere ohne ein zwischengeschaltetes Differenzierglied, zum Sollwert des Antriebs- bzw. Belastungsmoments addiert.

In entsprechender Weise sieht die Erfindung bei der Vorrichtung wie eingangs angegeben vor, dass die Messeinheit zum Messen des Wellenmoments direkt mit der Einheit zur Bestimmung des Sollwerts des Antriebs- bzw. Belastungsmoments verbunden ist, so dass das gemessene Wellenmoment als solches dem Sollwert des Antriebs- bzw. Belastungsmoments addierbar ist.

Idealerweise wird dadurch bei einem Sollwert von Null das Wellenmoment exakt gegengleich auf die Belastungsmaschine aufgeschaltet. Das Summenmoment für die Belastungsmaschine ist somit Null und die Drehzahl bleibt konstant. Man erhält also eine perfekt konstante Drehzahlregelung, wobei man mit einem Sollwert ungleich Null die Drehzahl auch ändern kann. Gegenüber dem Prüfling wirkt die Belastungsmaschine somit wie ein unendlich großes Trägheitsmoment, wodurch eigentlich keine dämpfende Wirkung zu erwarten wäre - im Gegenteil, eigentlich würden sich durch das größere Trägheitsmoment die Verhältnisse am Prüfstand verschlimmern. Dass.das erfindungsgemäße Verfahren in der Praxis doch eine hervorragende dämpfende Wirkung zeigt, ist selbst für einen Fachmann nicht naheliegend und wird weiter unten anhand einer systemtechnischen Untersuchung gezeigt.

Der vorliegende Ansatz unterscheidet sich von der Vorgehensweise gemäß Stand der Technik vor allem dadurch, dass die erfindungsgemäße Regelung ohne die Differentiation eines Messwerts auskommt. Die Vorteile bestehen folglich darin, dass diese Regelung deutlich einfacher als der Stand der Technik und gleichzeitig robust gegen Messrauschen ist.

Wie sich bei genauer Untersuchung herausstellt, erweist es sich als zweckmäßig, wenn das gemessene Wellenmoment über eine von einem Differenzierglied freie Verzögerungsstrecke mit dem Sollwert des Antriebs- bzw. Belastungsmoments verknüpft wird. Die Verzögerungsstrecke ist vorzugsweise so ausgelegt, dass eine geeignete Dämpfung der Resonanzfrequenzen erzielt wird.

Außerdem ist es günstig, wenn das gemessene Wellenmoment, bevor es dem Sollwert des Antriebs- bzw. Belastungsmoments aufgeschaltet wird, durch eine frequenzabhängige Übertragungsfunktion 1. Ordnung

$$G(s) = \frac{M_2(s)}{M_W(s)} = \frac{1}{\tau s + 1}$$

modifiziert wird. Unter Verwendung dieser Übertragungsfunktion kann die Dämpfung der Resonanzfrequenzen geeignet beschrieben und infolgedessen optimiert werden.

Bevorzugt ist das erfindungsgemäße Verfahren so eingerichtet, dass die Verzögerung zwischen dem gemessenen Wellenmoment und der resultierenden Rückwirkung im Antriebs- bzw. Belastungsmoment im Millisekundenbereich liegt, vorzugsweise weniger als ca. 20 ms, insbesondere 1 - 10 ms, beträgt. Bei einer Verzögerung in dem angegebenen Bereich wird eine optimale Dämpfung der Resonanzfrequenzen erzielt.

In Hinblick auf die erzielte Dämpfungswirkung kann das Verfahren dahingehend verbessert werden, dass das gemessene Wellenmoment mit einem konstanten Gewichtungsfaktor multipliziert und anschließend auf den Sollwert des Antriebs- bzw. Belastungsmoments aufgeschaltet wird. Der Vorteil hierbei ist, dass mithilfe des Gewichtungsfaktors eine ("stufenlose") Einstellung der Dämpfungswirkung erzielt wird.

Zur Regelung einer Drehzahl der Welle wird das gemessene Wellenmoment vorzugsweise mit einer Drehmomentvorgabe eines Reglers, insbesondere eines Drehzahlreglers, verknüpft. Dadurch lässt sich das erfindungsgemäße Verfahren vorteilhaft auch bei einer Prüfung bei unterschiedlichen, gegebenenfalls variierenden Drehzahlen einsetzen.

Die Erfindung wird nachfolgend anhand von besonders bevorzugten Ausführungsbeispielen, auf die sie jedoch nicht beschränkt sein soll, und unter Bezugnahme auf die Zeichnung noch weiter erläutert. In der Zeichnung zeigen im Einzelnen:

Fig. 1 schematisch einen Ausschnitt aus einer Prüfstandsanordnung mit der erfindungsgemäßen Vorrichtung;

Fig. 2 ein Modell einer Prüfstandsanordnung mit einer Welle;

Fig. 3 schematisch das Modell gemäß Fig. 2 ohne aktive Dämpfungsmaßnahmen;

Fig. 4 schematisch das Modell gemäß Fig. 2 mit einer idealisierten Variante des erfindungsgemäßen Verfahrens;

Fig. 5 schematisch das Modell gemäß Fig. 2 mit dem erfindungsgemäßen Verfahren bei realen Verhältnissen; und

Fig. 6 die Wurzelortskurve der aus dem Modell gemäß Fig. 5 abgeleiteten Führungsübertragungsfunktion bei realen Verhältnissen.

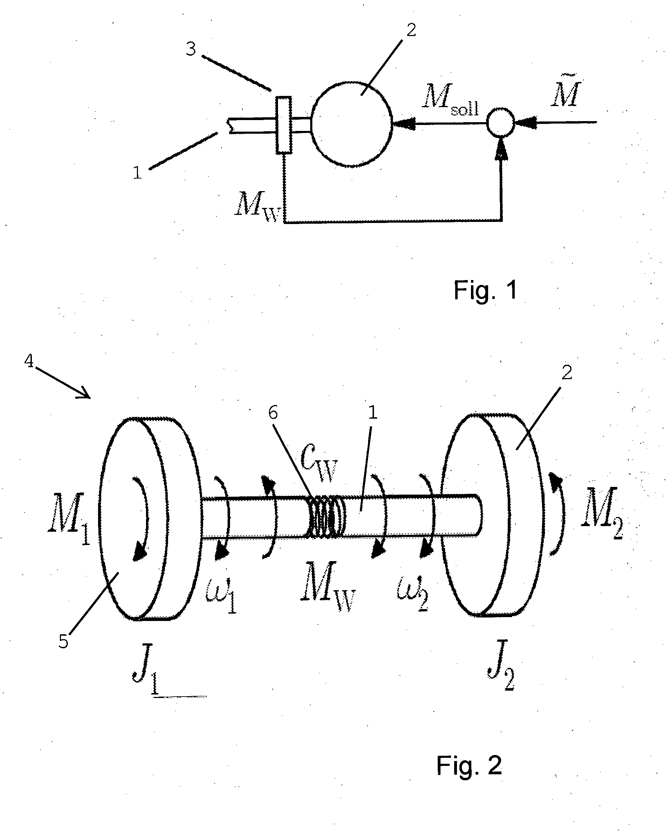

Fig. 1 illustriert das erfindungsgemäße Verfahren anhand einer teilweise schematischen Darstellung der involvierten Komponenten. Der Prüfling (nicht dargestellt) ist über eine Welle 1 mit einer Belastungsmaschine 2 verbunden. Das Drehmoment der Belastungsmaschine 2 wird in Form eines Sollwerts vorgegeben. An der Welle 1 wird eine Drehmomentmessung 3 durchgeführt und das Ergebnis der Messung 3 wird als solches dem Sollwert des Antriebs- bzw. Belastungsmoments aufgeschaltet/addiert. Die Vorgabe der Belastungsmaschine 2 entspricht somit der Summe (bzw. bei umgekehrtem Vorzeichen der Differenz) des ursprünglichen Sollwerts und des gemessenen Drehmoments. Angenommen der Sollwert des Antriebs- bzw. Belastungsmoments beträgt Null, wird jedes an der Welle 1 gemessene Moment von der Belastungsmaschine 2 kompensiert und die Drehzahl bleibt konstant. Dass ein Moment an der Welle 1 keine Änderung der Drehzahl bewirkt bedeutet, dass die Belastungsmaschine 2 scheinbar ein unendlich großes Trägheitsmoment aufweist. Dadurch würde jedoch keine Dämpfung sondern lediglich eine Verschiebung der Resonanzfrequenzen des Prüfstands bewirkt.

Dass das erfindungsgemäße Verfahren die gewünschte Dämpfung erzielt, zeigt sich erst bei einer genaueren Untersuchung, welche hier der Einfachheit halber an einem Prüfstand mit einer Welle 1 durchgeführt wird. Das Verfahren kann aber selbstverständlich auch bei Prüfständen mit mehreren Wellen sowie mit Antriebs- und/oder Belastungsmaschinen eingesetzt werden.

Fig. 2 zeigt modellhaft eine Prüfstandsanordnung 4 mit einer Welle 1. Die Welle 1 verbindet einen Prüfling 5 mit einer Belastungsmaschine 2. Der Prüfling 5 hat das Trägheitsmoment $J_1$, liefert das Moment $M_1$ und dreht sich mit der Winkelgeschwindigkeit $\omega_1$. Die Belastungsmaschine 2 hat das Trägheitsmoment $J_2$, liefert das Moment $M_2$ und dreht sich mit der Winkelgeschwindigkeit $\omega_2$. Die Drallsätze lauten

$$J_1 \frac{d\omega_1}{dt} = M_1 - M_W \qquad J_2 \frac{d\omega_2}{dt} = M_W - M_2$$

mit dem Wellenmoment $M_W$, für das vereinfachend (ohne Dämpfung der Welle)

$$M_W = c_W(\varphi_1 - \varphi_2)$$

mit der Federsteifigkeit $c_W$ der Welle 1 und der Winkeldifferenz $\varphi_1 - \varphi_2$ zwischen Prüfling 5 und Belastungsmaschine 2 gilt. Die in der Mitte der Welle 1 angedeutete Feder 6 dient der Illustration der endlichen Torsionssteifigkeit der Welle 1.

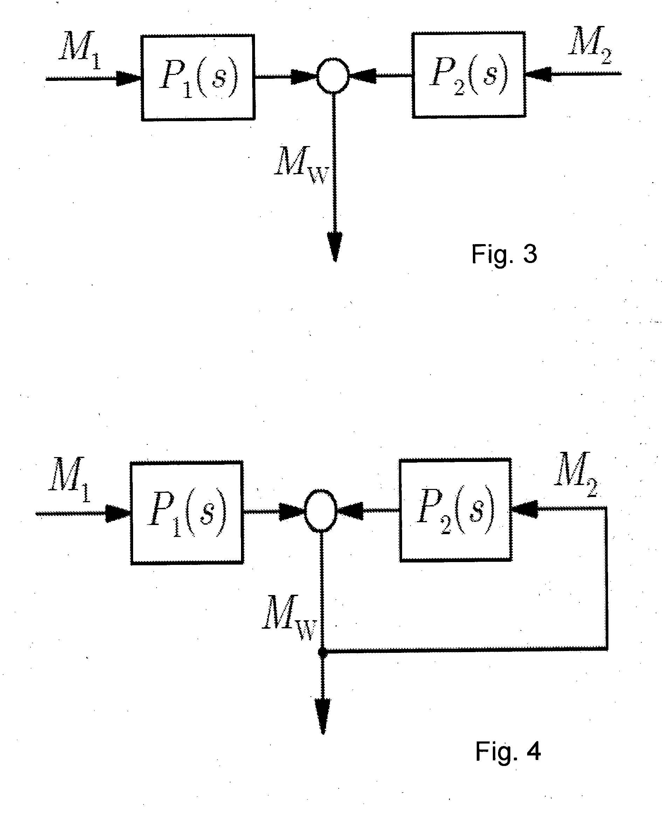

In Fig. 3 ist modellhaft der systemtechnische Zusammenhang der Momente am Prüfling 5 $(M_1)$ an der Belastungsmaschine 2 $(M_2)$ und an der Welle 1 $(M_W)$ dargestellt. Die Verknüpfungen der Momente in dem dargestellten Fall ohne aktive Dämpfungsmaßnahmen werden durch folgende Übertragungsfunktionen $P_1$ und $P_2$ dargestellt:

$$P_1(s) = \frac{M_W(s)}{M_1(s)} = \frac{\dfrac{c_W}{J_1}}{s^2 + \left(\dfrac{c_W}{J_1} + \dfrac{c_W}{J_2}\right)}$$

$$P_2(s) = \frac{M_W(s)}{M_2(s)} = \frac{\dfrac{C_W}{J_2}}{s^2 + \left(\dfrac{C_W}{J_1} + \dfrac{C_W}{J_2}\right)}$$

Die Pole der beiden Übertragungsfunktionen liegen auf der imaginären Achse und entsprechen daher einer ungedämpften Resonanzfrequenz

$$f_0 = \frac{1}{2\pi} \sqrt{\frac{C_W}{J_1} + \frac{C_W}{J_2}}$$

Fig. 4 erhält man durch eine Erweiterung des Modells gemäß Fig. 3 um das erfindungsgemäße Verfahren, wobei - wie sich herausstellt - dieses Modell nicht den realen Verhältnissen entspricht. Im Unterschied zu Fig. 3 wird hier das Wellenmoment $M_W$ direkt als Moment $M_2$ der Belastungsmaschine aufgeschaltet. Durch diese Rückkopplung erhält man als "Führungsübertragungsfunktion"

$$T_{\text{ideal}}(s) = \frac{M_W(s)}{M_1(s)} = \frac{P_1(s)}{1 - P_2(s)} = \frac{\dfrac{C_W}{J_1}}{s^2 + \dfrac{C_W}{J_1}}$$

Die Pole von $T_{\text{ideal}}$ liegen, wie jene von $P_1$ und $P_2$, auf der imaginären Achse und entsprechen einer niedrigeren aber nach wie vor ungedämpften Resonanzfrequenz

$$f_0 = \frac{1}{2\pi} \sqrt{\frac{C_W}{J_1}}$$

Gegenüber dem rückkopplungsfreien Modell aus Fig. 3 wurde also kein Vorteil erzielt.

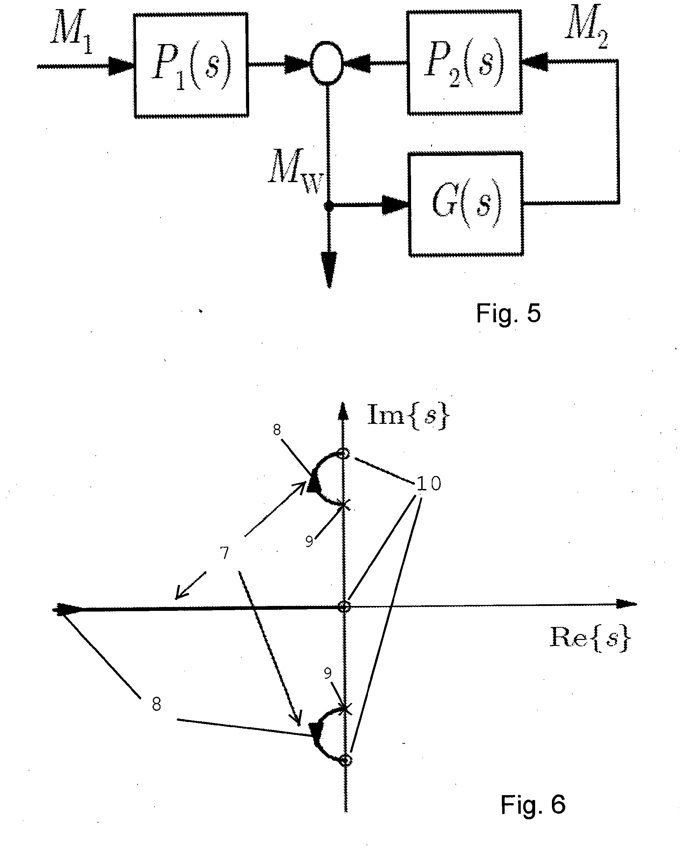

Erst Fig. 5 zeigt modellhaft das erfindungsgemäße Verfahren bei realen Verhältnissen. Anders als in Fig. 4 wird darin berücksichtigt, dass das Wellenmoment $M_W$ in Wirklichkeit gar nicht direkt als Moment $M_2$ der Belastungsmaschine 2 aufgeschaltet werden kann. Die Messung 3 des Wellenmoments und der Momentenaufbau in der Belastungsmaschine 2 bewirken eine nicht zu vernachlässigende Verzögerung. Die exakte mathematische Beschreibung dieser Verzögerung ist schwierig, es kann jedoch vereinfachend für die weitere Betrachtung die Übertragungsfunktion 1. Ordnung

$$G(s) = \frac{M_2(s)}{M_W(s)} = \frac{1}{\tau s + 1}$$

mit der Zeitkonstante $\tau$ verwendet werden. Die ursprünglich direkte Rückkopplung wird also bei realen Verhältnissen durch eine Übertragungsfunktion G modifiziert. Als "Führungsübertragungsfunktion" ergibt sich unter Berücksichtigung der modifizierten Rückkopplung

$$T_{\text{real}}(s) = \frac{M_W(s)}{M_1(s)} = \frac{P_1(s)}{1 - G(s)P_2(s)} = \frac{\tau \dfrac{C_W}{J_1} s + \dfrac{C_W}{J_1}}{\tau s^3 + s^2 + \tau \left(\dfrac{C_W}{J_1} + \dfrac{C_W}{J_2}\right) s + \dfrac{C_W}{J_1}}$$

Im Unterschied zu $T_{\text{ideal}}$ hat $T_{\text{real}}$ offenbar drei Polstellen. Die Lage dieser Pole könnte zwar exakt berechnet werden, was aber nicht zum Verständnis der Dämpfungswirkung beiträgt. Als hilfreich erweist sich hingegen ein regelungstechnisches Werkzeug, das sogenannte Wurzelortskurvenverfahren. Die Übertragungsfunktion eines fiktiven offenen Kreises

$$L(s) = \tau \frac{Z(s)}{N(s)}$$

mit den Polynomen

$$Z(s) = \left[ s^2 + \left( \frac{c_W}{J_1} + \frac{c_W}{J_2} \right) \right] s$$

$$N(s) = s^2 + \frac{c_W}{J_1}$$

ergibt die Führungsübertragungsfunktion

$$T(s) = \frac{L(s)}{1 + L(s)} = \frac{\tau \, Z(s)}{\tau \, Z(s) + N(s)}$$

Ein Vergleich mit $T_{\text{real}}$ zeigt, dass die beiden Führungsübertragungsfunktionen den gleichen Nenner und folglich die gleichen Polstellen haben, deren Ort sich somit mit dem Wurzelortskurvenverfahren leicht in Abhängigkeit der Zeitkonstante $\tau$ darstellen lässt (s. Fig. 6).

In Fig. 6 ist die Wurzelortskurve 7 von $T_{\text{real}}$ aufgetragen. Die Pfeile 8 weisen in Richtung der Verschiebung der Polstellen bei zunehmender Zeitkonstante $\tau$. Die für die Resonanz entscheidenden Pole bewegen sich mit größer werdendem $\tau$ auf Halbkreisen von den rein imaginären Nullstellen von N 9, welche den Polen von $T_{\text{ideal}}$ entsprechen, zu den ebenfalls rein imaginären Nullstellen von Z 10, welche den Polen von $P_1$ und $P_2$ entsprechen. Für kleine Zeitkonstanten $\tau$ wandern die Pole von $T_{\text{real}}$ aber von der imaginären Achse in die linke Halbebene, was bedeutet dass sie dort einen von Null abweichenden Realteil aufweisen. Ein von Null abweichender Realteil entspricht einer Dämpfung der Resonanz.

In der Praxis ist eine künstliche Vergrößerung der Zeitkonstante $\tau$ weder notwendig noch sinnvoll, da bereits durch die Messung 3 des Wellenmoments und den Momentenaufbau eine Verzögerung im Millisekundenbereich, beispielsweise von etwa 1 - 10 ms, auftritt. Eine weitere, künstliche Verzögerung würde die dämpfende Wirkung wieder abschwächen, da die Polstellen bei großen Zeitkonstanten $\tau$ sich immer weiter den Nullstellen von Z annähern.

**Patentansprüche**

1. Verfahren zur Dämpfung von Schwingungen beim Prüfen eines zumindest eine Welle (1) aufweisenden Antriebsstrangs, wobei die Welle (1) zur Einstellung eines Antriebs- bzw. Belastungsmoments mit zumindest einer Antriebs- bzw. Belastungsmaschine (2) verbunden wird, welcher ein Sollwert des Antriebs- bzw. Belastungsmoments vorgegeben wird, wobei ein von der Relativverdrehung zwischen zwei Stellen der Welle (1) abhängiges Wellenmoment gemessen wird, **dadurch gekennzeichnet, dass** das gemessene Wellenmoment als solches zum Sollwert des Antriebs- bzw. Belastungsmoments addiert wird.

2. Verfahren nach Anspruch 1, **dadurch gekennzeichnet, dass** das gemessene Wellenmoment über eine von einem Differenzierglied freie Verzögerungsstrecke mit dem Sollwert des Antriebs- bzw. Belastungsmoments verknüpft wird.

3. Verfahren nach Anspruch 1 oder 2, **dadurch gekennzeichnet, dass** das gemessene Wellenmoment bevor es dem Sollwert des Antriebs- bzw. Belastungsmoments aufgeschaltet wird durch eine frequenzabhängige Übertragungsfunktion 1. Ordnung

$$G(s) = \frac{M_2(s)}{M_W(s)} = \frac{1}{\tau s + 1}$$

modifiziert wird.

4. Verfahren nach einem der Ansprüche 1 bis 3, **dadurch gekennzeichnet, dass** die Verzögerung zwischen dem gemessenen Wellenmoment und der resultierenden Rückwirkung im Antriebs- bzw. Belastungsmoment im Millisekundenbereich liegt, vorzugsweise weniger als ca. 20 ms, insbesondere 1 - 10 ms, beträgt.

5. Verfahren nach einem der Ansprüche 1 bis 4, **dadurch gekennzeichnet, dass** das gemessene Wellenmoment mit einem konstanten Gewichtungsfaktor multipliziert und anschließend auf den Sollwert des Antriebs- bzw. Belastungsmoments aufgeschaltet wird.

6. Verfahren nach einem der Ansprüche 1 bis 5, **dadurch gekennzeichnet, dass** das gemessene Wellenmoment zur Regelung einer Drehzahl der Welle mit einer Drehmomentvorgabe eines Reglers, insbesondere eines Drehzahlreglers, verknüpft wird.

7. Vorrichtung zur Durchführung des Verfahrens nach einem der Ansprüche 1 bis 6, mit einem Antriebsstrang mit zumindest einer Welle (1), welche mit zumindest einer Antriebs- bzw. Belastungsmaschine (2) zur Einstellung eines Antriebs- bzw. Belastungsmoments an der Welle (1) gekoppelt ist, mit einer Einheit zur Bestimmung eines Sollwerts des Antriebs- bzw. Belastungsmoments, und mit einer Messeinheit (3) zum Messen eines von der Relativverdrehung zwischen zwei Stellen der Welle abhängigen Wellenmoments, **dadurch gekennzeichnet, dass** die Messeinheit (3) zum Messen des Wellenmoments direkt mit der Einheit zur Bestimmung des Sollwerts des Antriebs- bzw. Belastungsmoments verbunden ist, so dass das gemessene Wellenmoment als solches dem Sollwert des Antriebs- bzw. Belastungsmoments addierbar ist.

## Claims

1. A method for damping vibrations while testing a drivetrain having at least one shaft (1), which shaft (1) is connected to at least one drive or load machine (2) for adjusting a drive or load torque, a target value of the drive or load torque being specified for said machine, wherein a shaft torque is measured which is dependent on the relative twist between two points of said shaft (1), **characterized in that** the measured shaft torque as such is combined with the target value of the drive or load torque.

2. A method according to claim 1, **characterized in that** the measured shaft torque is linked to the target value of the drive or load torque via a delay line free from any differentiating member.

3. A method according to claims 1 or 2, **characterized in that** the measured shaft torque is modified by a frequencydependent first-order transfer function

$$G(s) = \frac{M_2(s)}{M_W(s)} = \frac{1}{\tau s + 1}$$

before being added to the target value of the drive or load torque.

4. A method according to any one of claims 1 to 3, **characterized in that** the delay between the measured shaft torque and the resulting reaction on the drive or load torque is in the range of milliseconds, preferably less than about 20 ms, particularly 1 - 10 ms.

5. A method according to any one of claims 1 to 4, **characterized in that** the measured shaft torque is multiplied with a constant weighting factor and subsequently added to the target value of the drive or load torque.

6. A method according to any one of claims 1 to 5, **characterized in that** the measured shaft torque is linked to a preset target torque of a controller, in particular of a rotation speed controller, in order to control the rotation speed of the shaft.

7. A device for carrying out the method according to any one of claims 1 to 6, equipped with a drivetrain having at least one shaft (1), which shaft is connected to at least one drive or load machine (2) for adjusting a drive or load torque on said shaft (1), equipped with a unit for determining a drive or load torque target value, and equipped with a measuring unit (3) for measuring a shaft torque dependent on the relative twist between two points of said shaft, **characterized in that** said measuring unit (3) for measuring the shaft torque is directly connected to the unit for determining the drive or load torque target value, so that the measured shaft torque as such may be combined with the target value of the drive or load torque.

**Revendications**

1. Procédé d'amortissement de vibrations lors de la vérification d'une chaîne cinématique présentant au moins un arbre (1), l'arbre (1) étant relié pour le réglage d'un couple d'entraînement ou de charge à au moins une machine d'entraînement ou de charge (2), à laquelle est prescrite une valeur de consigne du couple d'entraînement ou de charge, un couple d'arbre dépendant de la rotation relative entre deux points de l'arbre (1) étant mesuré, **caractérisé en ce que** le couple d'arbre mesuré est ajouté en tant que tel à la valeur de consigne du couple d'entraînement ou de charge.

2. Procédé selon la revendication 1, **caractérisé en ce que** le couple d'arbre mesuré est combiné, par une ligne de retard exempte d'un élément différenciateur, à la valeur de consigne du couple d'entraînement ou de charge.

3. Procédé selon la revendication 1 ou 2, **caractérisé en ce que** le couple d'arbre mesuré est modifié avant qu'il ne soit appliqué à la valeur de consigne du couple d'entraînement ou de charge par une fonction de transmission dépendant de la fréquence de 1$^{er}$ ordre

$$G(s) = \frac{M_2(S)}{M_w(S)} = \frac{1}{T\,S + 1}$$

4. Procédé selon l'une quelconque des revendications 1 à 3, **caractérisé en ce que** le retard entre le couple d'arbre mesuré et la rétroaction résultante dans le couple d'entraînement ou de charge se trouve dans la plage des millisecondes, de préférence est inférieur à environ 20 ms, en particulier est de 1 à 10 ms.

5. Procédé selon l'une quelconque des revendications 1 à 4, **caractérisé en ce que** le couple d'arbre mesuré est multiplié par un facteur de pondération constant et est ensuite appliqué à la valeur de consigne du couple d'entraînement ou de charge.

6. Procédé selon l'une quelconque des revendications 1 à 5, **caractérisé en ce que** le couple d'arbre mesuré est combiné, pour la régulation d'une vitesse de rotation de l'arbre, à une prescription de couple d'un régulateur, en particulier d'un régulateur de vitesse de rotation.

7. Dispositif pour la réalisation du procédé selon l'une quelconque des revendications 1 à 6, avec une chaîne cinématique présentant au moins un arbre (1) qui est couplé à au moins une machine d'entraînement ou de charge (2) pour le réglage d'un couple d'entraînement ou de charge sur l'arbre (1), avec une unité pour la détermination d'une valeur de consigne du couple d'entraînement ou de charge, et avec une unité de mesure (3) pour la mesure d'un couple d'arbre dépendant de la rotation relative entre deux points de l'arbre, **caractérisé en ce que** l'unité de mesure (3) pour la mesure du couple d'arbre est directement reliée à l'unité pour la détermination de la valeur de consigne du couple d'entraînement ou de charge de sorte que le couple d'arbre mesuré puisse être ajouté en tant que tel à la valeur de consigne du couple d'entraînement ou de charge.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3808524
- EP 1333268 A2
- US 5078008 A
- DE 10247347 A1
- US 4468958 A
- WO 2011022746 A1
- AT 010301 U2
- AT 007889 U2
- US 8006548 B2